# EUROPÄISCHE PATENTSCHRIFT

(11) **EP 0 398 140 B1**
(45) Veröffentlichungstag und Bekanntmachung des Hinweises auf die Patenterteilung: **12.10.1994**
(21) Anmeldenummer: 90108711.4
(22) Anmeldetag: 09.05.1990
(51) Int. Cl.: F16L 3/14

(54) **Aufhänge- und Befestigungsvorrichtung für Rohre**
Suspension and fastening device for pipes
Dispositif de suspension et fixation pour tuyaux

(30) Priorität: 13.05.1989 DE 3915769
(43) Veröffentlichungstag der Anmeldung: 22.11.1990
(73) Patentinhaber: Schneiderat, Johann, 46509 Xanten (DE)
(72) Erfinder: Schneiderat, Johann, 46509 Xanten (DE)
(74) Vertreter: Lemcke, Rupert, Dipl.-Ing.

(56) Entgegenhaltungen:
- DE-B- 2 516 092
- GB-A- 2 127 126
- US-A- 3 933 377

## Beschreibung

Die Erfindung betrifft ein Rohr mit einer Aufhänge- und Befestigunsvorrichtung nach den Merkmalen gemäß Oberbegriff des Anspruches 1.

Es ist bekannt, Rohre mittels Rohrschellen aufzuhängen und zu befestigen. Derartige Rohrschellen bestehen im allgemeinen aus zwei flachen Bändern aus Stahl, von denen jedes eine im wesentlichen halbkreisförmige Ausbuchtung besitzt und die so aneinandergefügt werden, daß sie mit den halbkreisförmigen Ausbuchtungen das Rohr umfassen. Die beiden Stahlbänder werden dann im allgemeinen zu beiden Seiten des durch sie hindurchgeführten Rohres miteinander verschraubt. Derartige Rohrschellen sind insbesondere in Ausführungsformen für große Nennweiten außerordentlich teuer und materialintensiv, da die Stahlbänder eine gewisse Dicke und Festigkeit besitzen müssen, wenn sie sich unter den durch das aufgehängte Rohr ausgeübten Kräften nicht verformen sollen. Insbesondere wenn aus Korrosionsgründen Rohrschellen aus Edelstahl verwendet werden, ist hier der Materialaufwand beträchtlich.

Beim Rohr mit Aufhänge- und Befestigungsvorrichtung der eingangs genannten Art, wie sie durch die DE-B-2 516 092 bekannt ist, ist das auf das Rohr aufgesetzte Aufhängeelement als quer zur Längsachse des Rohres angeordneter Aufhängeblock ausgebildet, der an seinen Enden Durchtrittsbohrungen in besonders angeschweißten Teilen aufweist, durch welche die Enden von das Rohr auf einem Umfangswinkel von 180° umfassenden Bändern hindurchgeführt und verschraubt sind. Diese Vorrichtungen werden im allgemeinen als Rohrbügelschellen bezeichnet und haben sich ebenfalls als materialaufwendig erwiesen, wenn größere Kräfte aufgenommen und die Einzelteile gegebenenfalls aus Edelstahl gefertigt werden müssen.

Der Erfindung liegt die Aufgabe zugrunde, ein Rohr mit einer Aufhänge- und Befestigungsvorrichtung mit den eingangs angegebenen Merkmalen so auszubilden, daß die Aufhänge- und Befestigungsvorrichtung bei erheblich geringerem Materialaufwand dazu geeignet ist, trotzdem höhere Kräfte aufzunehmen und dabei einfach und flexibel in der Anwendung zu sein.

Die Lösung dieser Aufgabe erfolgt erfindungsgemäß mit den Merkmalen aus dem kennzeichnenden Teil des Patentanspruchs 1.

Vorteilhafte Ausführungsformen der erfindungsgemäßen Vorrichtung sind in den Unteransprüchen beschrieben.

Das Grundelement der erfindungsgemäßen Aufhänge- und Befestigungsvorrichtung ist das als flache Aufhängelasche ausgebildete Aufhängeelement, das nicht, wie bei bekannten Vorrichtungen, mit seiner Breitseite in Querrichtung, sondern mit seiner Schmalseite in Längsrichtung auf das Rohr aufgesetzt wird. Diese Ausbildung hat zur Folge, daß kaum Biegemomente auf die Aufhängelasche ausgeübt werden und somit bei geringem Materialaufwand eine Konstruktion erreicht wird, welche hohe Kräfte aufnehmen kann. Wie weiter unten anhand von Ausführungsbeispielen näher erläutert, sind die Durchtrittsbohrungen schräg durch die Breitseite der Aufhängelasche hindurchgeführt, wobei der Winkel dieser Durchtrittsbohrungen variabel ist je nach dem Rohrdurchmesser und den aufzunehmenden Kräften. Die Enden des Befestigungselementes sind durch die Durchtrittsbohrungen hindurchgeführt und verschraubt, wobei den zwischen den Schraubenmuttern und den Breitseiten der Aufhängelasche angeordneten, an einem Ende ebenfalls abgeschrägten Distanzhülsen eine besondere Bedeutung für die Übertragung der Kräfte zukommt. Als Befestigungselement kann ein um das Rohr ganz herumgeführtes Stahlseil dienen. Eine besonders vorteilhafte Ausführungsform, die im wesentlichen in den Ansprüchen 5 und 9 beschrieben ist und ebenfalls weiter unten anhand von Ausführungsbeispielen näher erläutert wird, besitzt als Befestigungselement mehrere zu beiden Seiten des Rohres angeordnete Befestigungsbügel, die einerseits an der Aufhängelasche und andererseits an einer diametral zur Aufhängelasche angeordneten, ebenfalls mit der Schmalseite in Längsrichtung auf das Rohr aufgesetzten Verbindungslasche befestigt sind. Besonders bewährt haben sich Ausführungsformen, bei denen zu beiden Seiten des Rohres jeweils zwei oder mehr derartiger Befestigungsbügel angeordnet sind. Diese Ausführungsformen stellen eine besonders effektive und leichte Montage der Vorrichtung sicher.

An der Aufhängelasche und an der Verbindungslasche dieser Ausführungsform können in konstruktiv einfacher Weise Aufhänge- und Abstützelemente angeordnet sein, die in bekannter Weise auch als Gleitlager ausgebildet werden können.

Die erfindungsgemäße Aufhänge- und Befestigungsvorrichtung unterscheidet sich prinzipiell von den üblichen Rohrschellen und Rohrbügelschellen und kann insbesondere wegen des bei der Ausführungsform mit Befestigungsbügeln greiferartigen Umfassens der Rohre als "Rohrgrip" bezeichnet werden.

Im folgenden werden anhand der beigefügten Zeichnungen Ausführungsbeispiele des neuen Rohrgrips näher erläutert.

In den Zeichnungen zeigen:
- Fig. 1: in einer Ansicht axial zum aufzuhängenden Rohr eine erste Ausführungsform eines Rohrgrips;
- Fig. 1a: in einer Ansicht entsprechend Fig. 1 eine erste Variante der Ausführungsform nach Fig. 1;
- Fig. 1b: in einer Ansicht entsprechend Fig. 1 eine zweite Variante der Ausführungsform nach Fig.1;
- Fig. 1c: eine Teilseitenansicht der Variante nach Fig. 1b;
- Fig. 1d: in einer Ansicht entsprechend Fig. 1 eine dritte Variante der Ausführungsform nach Fig. 1;
- Fig. 1e: in einer Ansicht entsprechend Fig. 1 eine vierte Variante der Ausführungsform nach Fig. 1;
- Fig. 2: die Ausführungsform des Rohrgrips nach Fig. 1 in einer Seitenansicht.
- Fig. 3: in einer Ansicht analog Fig. 1 eine Variante des Rohrgrips mit als Gleitlager ausgebildeten Abstützelementen;
- Fig. 3a: eine Teilansicht der Ausführung nach Fig. 3 gemäß der Linie a-b;
- Fig. 4: in einer Seitenansicht eine Ausführungsform eines Rohrgrips zur Aufhängung vertikal stehender Rohre.
- Fig. 5: die Ausführungsform nach Fig. 4 in einer Ansicht axial zum aufzuhängenden Rohr.

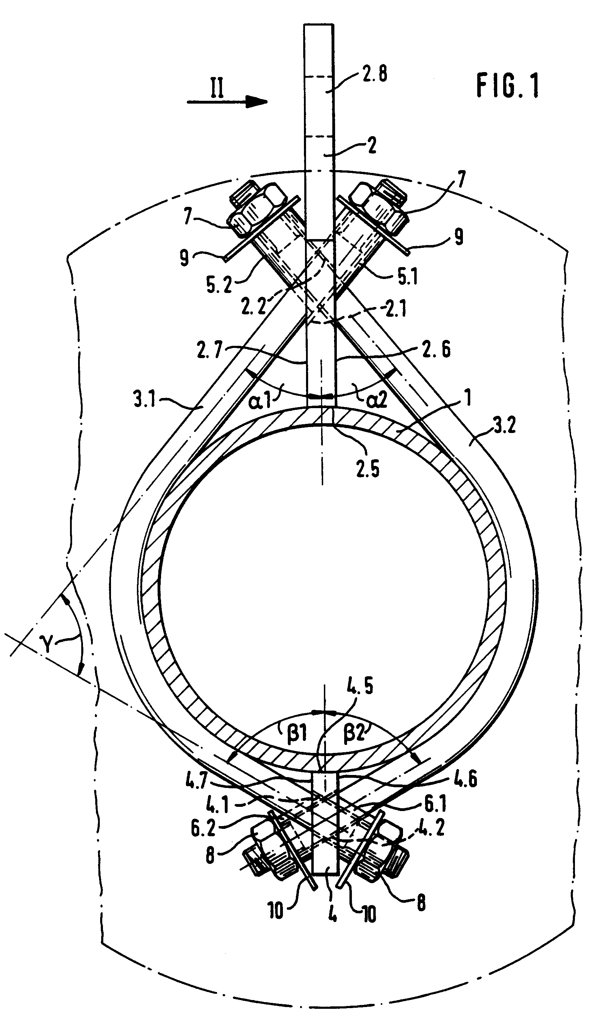

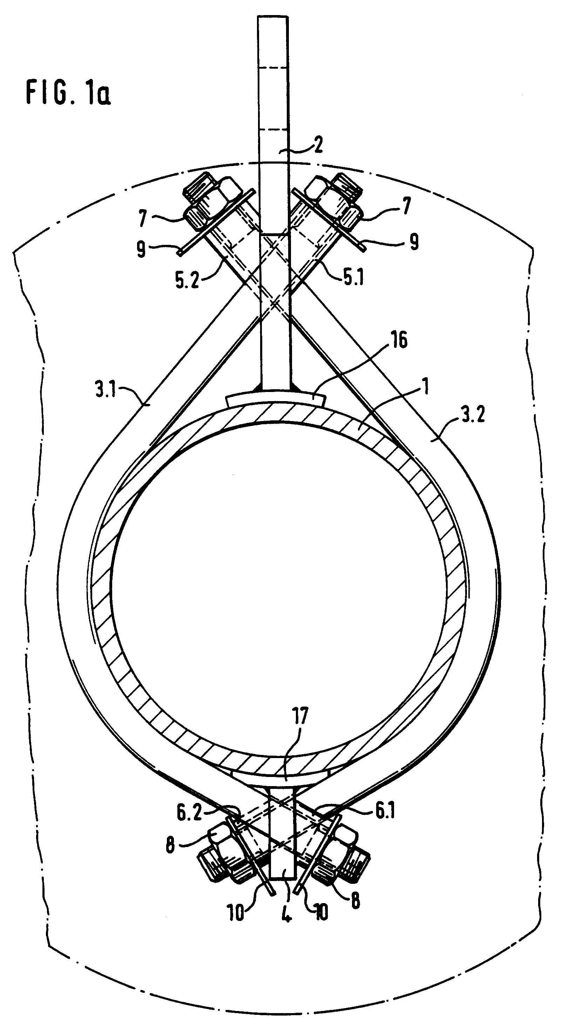

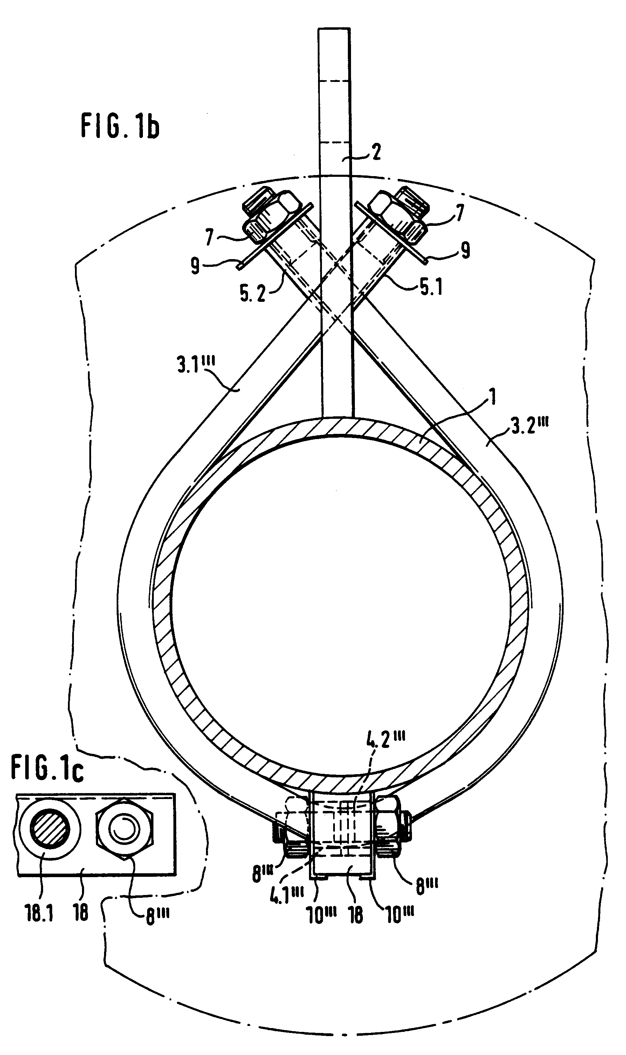

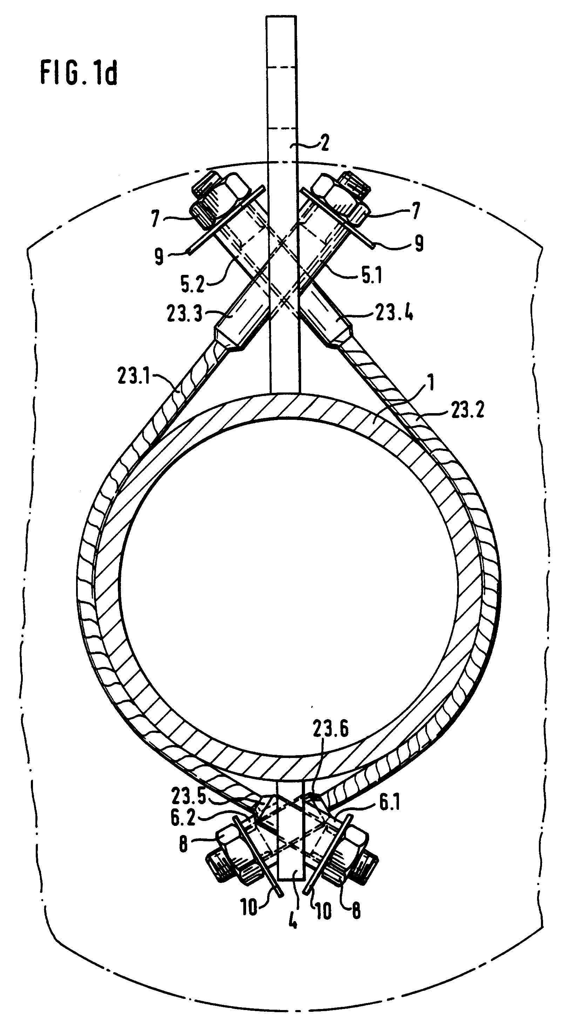

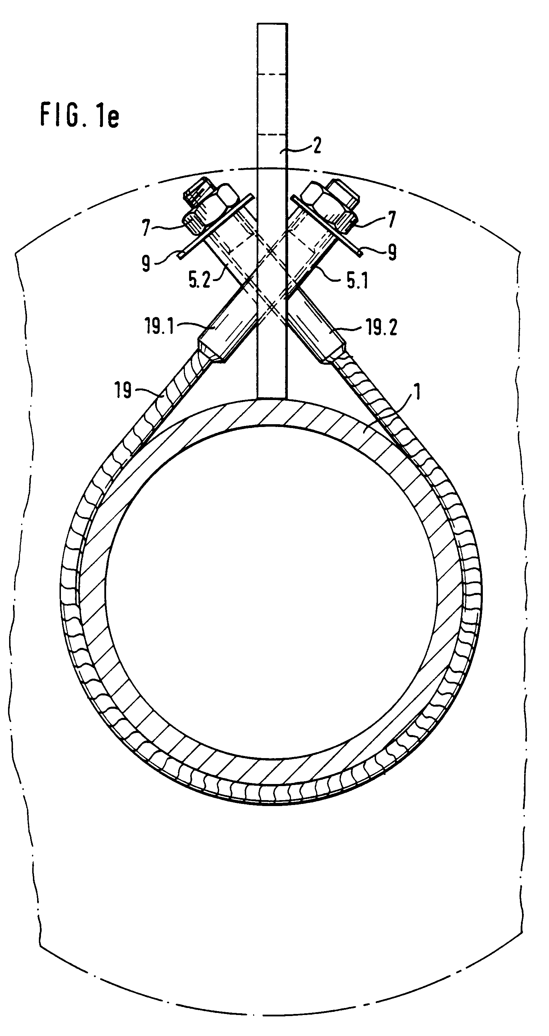

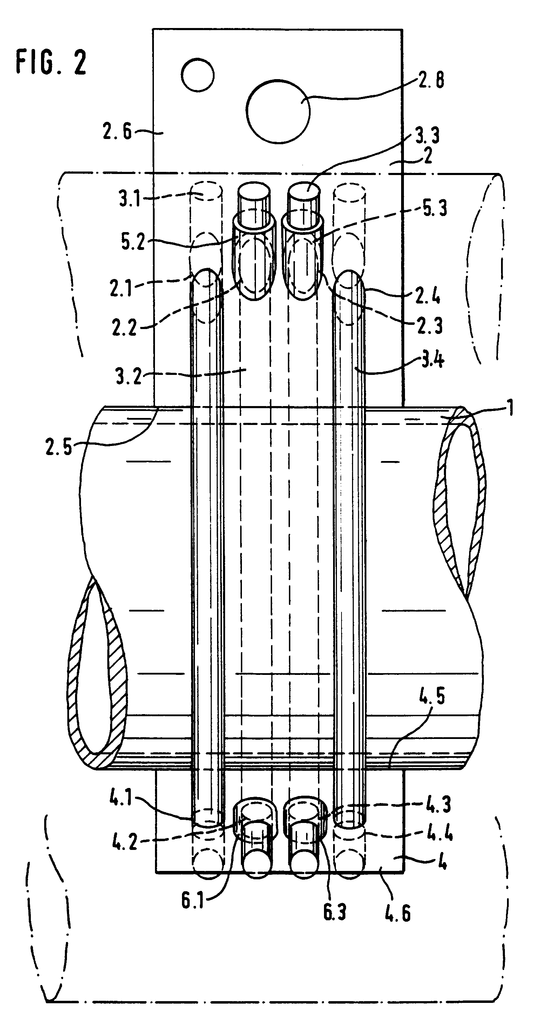

Bei der in den Fig. 1 und 2 dargestellten Ausführungsform eines Rohrgrips ist auf das zu befestigende Rohr 1 eine flache Aufhängelasche 2 mit ihrer Schmalseite 2.5 in Längsrichtung des Rohres aufgesetzt. Im dargestellten Ausführungsbeispiel ist dies die Oberseite des Rohres 1, so daß die Breitseiten 2.6 und 2.7 der Aufhängelasche 2 in Längsrichtung und vertikal verlaufen. Die Schmalseite kann dabei, wie in einer Variante nach Fig. 1a dargestellt, durch Unterlegen einer dem Rohrdurchmesser angepaßten Schale 16 zur besseren Kraftverteilung und geringeren Flächenpressung des Rohrmantels vergrößert werden. Im oberen Bereich der Aufhängelasche 2 ist eine Aufhängeöse 2.8 angeordnet.

Diametral zur Aufhängelasche 2 ist im dargestellten Fall auf die Unterseite des Rohres 1 eine flache Verbindungslasche 4 mit ihrer Schmalseite 4.5 in Längsrichtung des Rohres aufgesetzt. Die Schmalseite kann dabei, wie in der Variante nach Fig. 1a dargestellt, durch Unterlegen einer dem Rohrdurchmesser angepaßten Schale 17 zur besseren Kraftverteilung und geringeren Flächenpressung des Rohrmantels vergrößert werden. Die Breitseiten 4.6 und 4.7 der Verbindungslasche 4 verlaufen ebenfalls vertikal und in Längsrichtung des Rohres.

Durch die Aufhängelasche 2 sind schräg verlaufende Durchtrittsbohrungen 2.1 bis 2.4 hindurchgeführt, wobei die Achsen der Durchtrittsbohrungen 2.1 und 2.4 mit der Mittelebene der Aufhängelasche 2 in Richtung auf das Rohr gesehen einen spitzen Winkel α 1 einschließen, während die Durchtrittsbohrungen 2.2 und 2.3 mit dieser Mittelebene einen Winkel α 2 einschließen. Im dargestellten Ausführungsbeispiel besitzen die Winkel α1 und α2 den gleichen Betrag von ca. 40°-50°, aber entgegengesetztes Vorzeichen.

In gleicher Weise sind durch die Verbindungslasche 4 von den Breitseiten her Durchtrittsbohrungen 4.1 bis 4.4 schräg hindurchgeführt, wobei die Mittelachsen der Durchtrittsbohrungen 4.1 und 4.4 mit der Mittelebene der Verbindungslasche 4 in Richtung auf das Rohr gesehen, einen Winkel β 1 und die Mittelachsen der Durchtrittsbohrungen 4.2 und 4.3 mit dieser Mittelebene einen Winkel β2 einschließen. Im dargestellten Ausführungsbeispiel besitzen die Winkel β1 und β2 den gleichen Betrag von ca. 60°-70° und haben entgegengesetzte Vorzeichen.

Durch die Durchtrittsbohrungen 2.1 bis 2.4 sowie 4.1 bis 4.4 sind die mit Schraubengewinden versehenen Enden von Befestigungsbügeln 3.1 bis 3.4 hindurchgeführt. Es müssen mindestens drei Befestigungsbügel sein, je nach den Erfordernissen können aber auch mehr Befestigungsbügel vorhanden sein. Im dargestellten Ausführungsbeispiel sind insgesamt vier Befestigungsbügel vorhanden, von denen sich die Befestigungsbügel 3.1 und 3.4 auf der einen (in Fig. 1 der linken Seite) und die Befestigungsbügel 3.2 und 3.3 auf der anderen Seite (in Fig. 2 der rechten Seite) des Rohres 1 befinden. Die Befestigungsbügel 3.1 bis 3.4 sind so gekrümmt, daß ihre freien Enden miteinander einen Winkel γ bilden, der im dargestellten Ausführungsbeispiel ca. 80° beträgt.

Auf die durch die Durchtrittsbohrung hindurchgeführten Enden der Befestigungsbügel sind Distanzhülsen 5.1 bis 5.4 bzw. 6.1 bis 6.4 aufgesteckt, deren den Breitseiten der Aufhängelasche und der Verbindungslasche zugewandte Enden derart abgeschrägt sind, daß die Distanzhülsen mit diesen Enden flach an diesen Breitseiten anliegen, während sie mit ihren jeweils anderen Enden ebenfalls flach an den auf die Enden der Befestigungsbügel aufgeschraubten Schraubenmuttern 7 bzw. 8 anliegen. Dies bedeutet, daß die den Breitseiten der Aufhängelasche 2 und der Verbindungslasche 4 zugewandten Endflächen der Distanzhülsen mit ihrer Längsachse den gleichen spitzen Winkel einschließen, unter dem die Achsen der Durchtrittsbohrungen zur Mittelebene und damit zu den Breitseiten der Aufhängelasche und der Verbindungslasche stehen.
Mittels dieser Distanzhülsen 5.1 bis 5.4 bzw. 6.1 bis 6.4 werden die durch die Schraubenmuttern ausgeübten Kräfte auf die Aufhängelasche 2 und die Verbindungslasche 4 übertragen, wobei ein durch die Winkel α 1 undα2 bzw. β1 und β2 festgelegter Anteil dieser Kräfte auf die Oberfläche des Rohres 1 übertragen wird.

Die Winkel α1 und α2 sowie β1 und β2 können an die jeweiligen Gegebenheiten angepaßt werden und liegen im allgemeinen zwischen 30° und 80°. An diese Winkel und dem Rohrdurchmesser gleichsam angepaßt ist der Winkel γ, den die Enden der Befestigungsbügel miteinander einschließen und der im allgemeinen zwischen 50° und 100° liegt.
Die Schraubenmuttern 7 und 8 sind zweckmäßig mit Sicherungsvorrichtungen gegen ein Lockern versehen. Dies kann grundsätzlich durch Kontermuttern geschehen. Im dargestellten Ausführungsbeispiel ist eine besonders einfache und wenig Material beanspruchende Sicherungsart gewählt, indem jeweils über die benachbarten und parallel zueinander stehenden Enden zweier Befestigungsbügel Sicherungsbleche 9 und 10 geschoben sind, die mit entsprechenden Öffnungen versehen sind und an ihrer Außenseite Laschen besitzen, die jeweils an eine der Außenflächen der Schraubenmuttern 7 und 8 andrückbar sind und somit ein Lockern der Schraubenmuttern verhindern.

Es wird noch darauf hingewiesen, daß in Fig. 2 zur besseren Übrsichtlichkeit bezüglich der durch die Durchtrittsbohrungen 2.1 bis 2.4 und 4.1 bis 4.4. hindurchgeführten Enden der Befestigungsbügel 3.1 bis 3.4 die Schraubenmuttern 7 und 8 mit den Sicherungsblechen 9 und 10 nicht dargestellt sind.

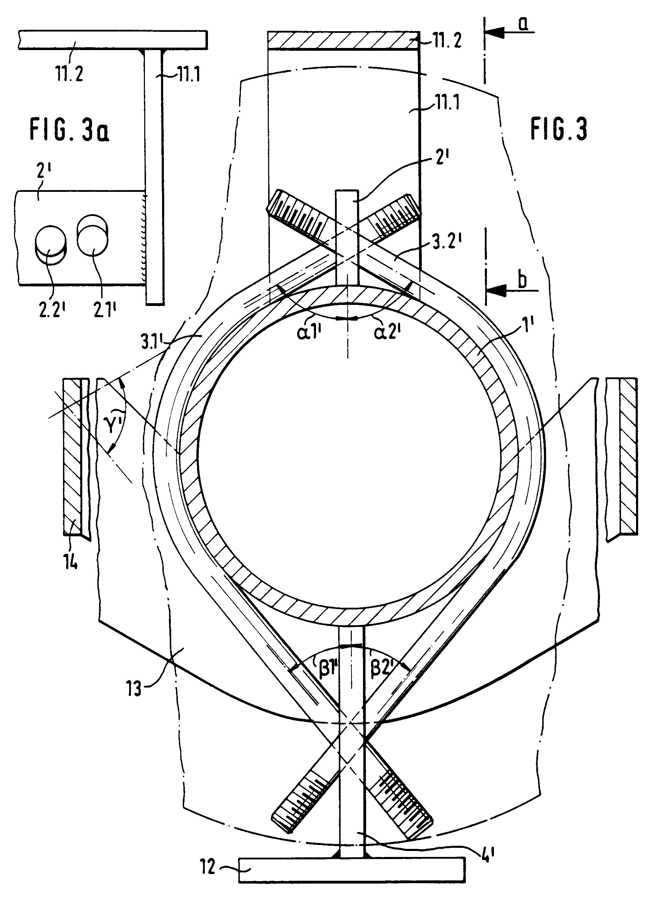

In Fig. 3 und 3a ist eine Ausführungsform eines Rohrgrips dargestellt, die im Prinzip der Ausführungsform nach den Fig. 1 und 2 entspricht. Sich entsprechende Bauteile sind daher mit den gleichen Bezugsziffern unter Hinzufügung eines "′" gekennzeichnet.

Auf das Rohr 1′ sind in Längsrichtung diametral einander gegenüberliegend eine Aufhängelasche 2′ und eine Verbindungslasche 4′ aufgesetzt. Aufhängelasche 2′ und Verbindungslasche 4′ sind wiederum über Befestigungsbügel miteinander verbunden, von denen in Fig. 3 ein Befestigungsbügel 3.1′ auf der linken Seite und ein Befestigungsbügel 3.2′ auf der rechten Seite des Rohres 1′ dargestellt sind. Die Enden der Befestigungsbügel sind durch die Durchtrittsbohrungen in der Aufhängelasche 2′ und der Verbindungslasche 4′ hindurchgeführt, wobei die Durchtrittsbohrungen 2.1′ und 2.2′ in Fig. 3a sichtbar sind.

Schraubenmuttern und Sicherungsbleche sind in Fig. 3 zwecks besserer Übersichtlichkeit nicht dargestellt. Die Durchtrittsbohrungen an der Aufhängelasche 2′ schließen mit der Mittelebene der Aufhängelasche 2′ in Fig. 3 Winkel α1′ und α2′ ein, die entgegengesetztes Vorzeichen und einen Betrag von ca. 60°-70° besitzen, während die entsprechenden Winkel β1′ und β2′, den die Achsen der Durchtrittsbohrungen in der Verbindungslasche 4′ mit deren Mittelebene einschließen, bei entgegengesetztem Vorzeichen einen Betrag von ca. 40°-50° aufweisen. Der Winkel γ', den die freien Enden der Befestigungsbügel 3.1′ und 3.2′ miteinander einschließen, beträgt wiederum ca. 50°-100°.

Wie aus Fig. 3 und 3a ersichtlich, ist an der Aufhängelasche 2′ eine als Gleitlager wirkende Abstützung aus Stützblechen 11.1 und einem in Längsrichtung verlaufenden Auflager 11.2 angeordnet. Ebenso ist zur vertikalen Abstützung nach unten an der Verbindungslasche 4′ ein in Längsrichtung verlaufendes Auflager 12 angeordnet. Zur seitlichen Abstützung dienen Auflager 14, die an schalenartigen, die Kontur des Rohres 1′ teilweise umfassenden Stützen 13 angeordnet sind, welche mit der Verbindungslasche 4′ verbunden sind.

Es wird noch darauf hingewiesen, daß mit dem dargestellten Rohrgrip in besonders günstiger Weise Rohre aufgehängt und befestigt werden können, die sich auf einer gegenüber der Umgebung erhöhten Temperatur befinden, weil bedingt durch die relativ kleinen Berührungsflächen zwischen dem Rohrgrip und der Außenwand des Rohres der Wärmeübergang durch Wärmeleitung zwischen dem Rohr und dem Rohrgrip stark herabgesetzt ist.

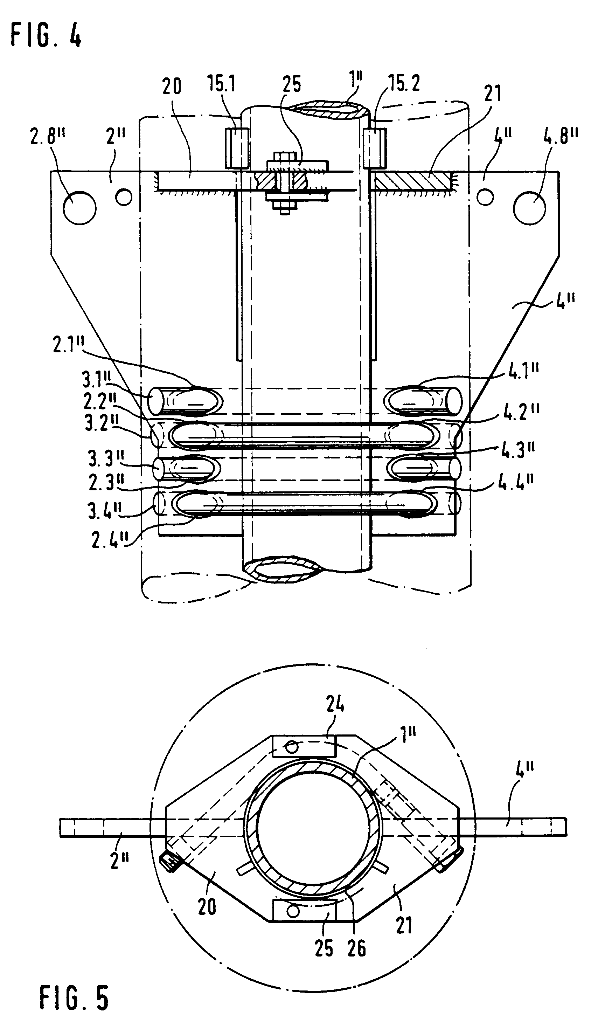

In Fig. 4 und 5 ist eine Ausführungsform des Rohrgrips beschrieben, die zur Aufhängung und Befestigung von in vertikaler Richtung verlaufenden Rohren oder Rohrabschnitten gedacht ist. Auch bei dieser Ausführungsform sind sich entsprechende Bauteile mit den gleichen Bezugsziffern bezeichnet und durch '' gekennzeichnet.

Auf das senkrecht verlaufende Rohr 1'' sind in Längsrichtung mit ihren Schmalseiten diametral einander gegenüberliegend eine Aufhängelasche 2'' sowie eine Verbindungslasche 4'' aufgesetzt. Dabei ist, wie aus Fig. 4 zu ersehen, die Verbindungslasche 4'' genauso aufgebaut wie die Aufhängelasche 2''. Beide weisen am äußeren Ende eine Aufhängeöse 2.8'' bzw. 4.8'' auf.

Die Durchtrittsbohrungen der Aufhängelasche 2'' sind mit 2.1'' bis 2.4'' und die Durchtrittsbohrungen der Verbindungslasche 4'' sind mit 4.1'' bis 4.4'' bezeichnet. Durch die Durchtrittsbohrungen sind die Enden der Befestigungsbügel 3.1'' bis 3.4'' hindurchgeführt. Schrauben und Schraubensicherungsvorrichtungen sind in Fig. 4 nicht dargestellt.

Obwohl durch das Anziehen der nicht dargestellten Schraubenmuttern die Aufhängelasche 2'' und die Verbindungslasche 4'' fest an die Rohroberfläche angedrückt werden, so daß erhebliche Reibungskräfte zur Halterung des Rohres entstehen, ist es bei vertikal aufzuhängenden Rohren zweckmäßig, eine weitere Sicherung gegen das Hindurchrutschen des Rohres vorzusehen. Hierzu dienen an der äußeren Oberfläche des Rohres 1'' angeordnete Knaggen 15.1 und 15.2, die sich in der nachfolgend beschriebenen Weise auf Aufhängelasche 2'' sowie der Verbindungslasche 4'' abstützen.

Wie aus Fig. 4 und 5 zu ersehen, sind an den Oberseiten der Aufhängelasche 2'' und der Verbindungslasche 4'' jeweils parallel zum Querschnitt des Rohres 1'' liegende Plattenelemente 20 und 21 befestigt, die so ausgebildet sind, daß sie, wie Fig. 5 zeigt, beim Ansetzen der Aufhängelasche 2'' und der Verbindungslasche 4'' aneinander angrenzen und über Verbindungselemente 24 und 25 miteinander verbunden werden können, so daß insgesamt eine Ringplatte entsteht, die das Rohr 1'' vollständig umgibt. Auf dieser aus den Plattenelementen 20 und 21 gebildeten Ringplatte liegen die Knaggen 15.1 und 15.2 direkt auf. Diese Anordnung hat den Vorteil, daß die über die Knaggen 15.1 und 15.2 übertragenen Kräfte sowie zusätzliche aus auftretenden Momenten resultierenden Querkräfte von der Ringplatte aufgenommen werden. Da zwischen der Innenseite der Ringplatte 20-21 und der Außenseite des Rohres 1'' ein vorgegebenes Spiel 26 vorhanden ist, wird ein Einbeulen und Einschnüren des Rohres 1'' verhindert.

In den Fig. 1b bis 1e sind, ausgehend von Fig. 1, vereinfachte Ausführungsformen der in Fig. 1 und 2 beschriebenen Ausführungsform des Rohrgrips dargestellt. In den Fig. 1b bis 1e sind die genau der Ausführungsform nach Fig. 1 entsprechenden Bauteile mit den gleichen Bezugsziffern wie dort bezeichnet.

Die Ausführungsform nach Fig. 1b unterscheidet sich von der Ausführungsform nach Fig. 1 dadurch, daß an die Stelle der Verbindungslasche 4 ein Verbindungselement 18 tritt, daß mit seiner Schmalseite 18.1 in Längsrichtung auf das Rohr 1 aufgesetzt ist. Durch das Verbindungselement 18 sind von den Breitseiten her Durchtrittsbohrungen 4.1''' und 4.2''' hindurchgeführt, deren Achsen aber nicht schräg, sondern senkrecht zu den Breitseiten verlaufen. Durch diese Durchtrittsbohrungen im Verbindungselement 18 sind die von der Aufhängelasche 2 abgewandten Enden der Befestigungsbügel 3.1''' und 3.2''' hindurchgeführt. Damit dieses Hindurchführen durch die Bohrungen ohne jedes Abknicken möglich ist, besitzen die Durchtrittsbohrungen 4.1''' und 4.2''', wie Fig. 1c zu entnehmen, an der Eintrittsseite der Befestigungsbügel 3.1''' und 3.2''' einen Abschnitt 18.1 mit erweiterten Durchmesser. Die Enden der Befestigungsbugel 3.1''' und 3.2''' sind mit Schraubengewinden versehen, auf welche Schraubenmuttern 8''' aufgeschraubt sind, die in der anhand von Fig. 1 beschriebenen Weise mit Sicherungsblechen 10 festgelegt sind.

In Fig. 1d ist eine Ausführungsform beschrieben, die sich von der Ausführungsform nach Fig. 1 lediglich dadurch unterscheidet, daß anstelle der Befestigungsbügel 3.1 bis 3.4 Befestigungselemente treten, die als Stahlseile 23.1 und 23.2 ausgebildet sind, an deren Enden jeweils Gewindehülsen 23.3 und 23.5 bzw. 23.4 und 23.6 angeordnet sind, die durch die Durchtrittsbohrungen der Aufhängelasche 2 und der Verbindungslasche 4 hindurchgeführt sind und auf welche die mit Sicherungsblechen 9 bzw. 10 festgelegten Schraubenmuttern 7 bzw. 8 aufgeschraubt sind. Im übrigen entspricht die Ausführungsform nach Fig. 1d der Ausführungsform nach 1 und 2.

Eine weiter vereinfachte Ausführungsform ist in Fig. 1e dargestellt Bei dieser Ausführungsform ist das Befestigungselement als um den Umfang des Rohres ganz herumgeführtes Stahlseil 19 ausgebildet, an dessen Enden jeweils Gewindehülsen 19.1 und 19.2 befestigt sind, welche durch die Bohrungen der Aufhängelasche 2 hindurchgeführt und dort in der anhand von Fig. 1 beschriebenen Weise befestigt sind. Ein der Verbindungslasche 4 entsprechendes Bauelement ist bei dieser Ausführungsform nicht erforderlich.

## Patentansprüche

1. Rohr (1, 1', 1'') mit einer Aufhänge- und Befestigungsvorrichtung mit einem auf das Rohr (1, 1', 1'') aufgesetzten Aufhängeelement in Form einer flachen Aufhängelasche (2, 2', 2''), welche mindestens zwei Durchtrittsbohrungen (2.1 - 2.4) aufweist, deren Achse jeweils mit der Mittelebene der Aufhängelasche (2, 2', 2'') in Richtung auf das Rohr (1, 1', 1'') gesehen vorgegebene spitze Winkel (α1, α2; α1', α2') einschließen, von denen mindestens die Winkel zweier Durchtrittsbohrungen (2.1, 2.2 bzw. 2.3, 2.4) entgegengesetzte Vorzeichen besitzen, und in Umfangsrichtung am Rohr (1, 1', 1'') entlang geführten Befestigungselementen (3.1 - 3.4), deren mit einem Schraubgewinde versehenen Enden durch die Durchtrittsbohrungen (2.1 - 2.4) hindurchgeführt sind, wobei zur Festlegung der Befestigungselemente (3.1 - 3.4) am Rohr (1, 1', 1'') Schraubenmuttern (7) auf die Enden aufschraubbar sind,
dadurch gekennzeichnet,
die Befestigungselemente (3.1 - 3.4) kreisförmigen Querschnitt aufweisen, daß die Aufhängelasche (2, 2', 2'') mit einer Schmalseite (2.5) in Längsrichtung des Rohres (1, 1', 1'') auf dessen Mantelfläche aufgesetzt ist und die Durchtrittsbohrungen (2.1 - 2.4) auf den in Längsrichtung verlaufenden Breitseiten (2.6, 2.7) aufweist, daß auf die Enden der Befestigungselemente (3.1 - 3.4) vor dem Aufschrauben der Schraubenmuttern (7) Distanzhülsen (5.1 - 5.4) aufgesteckt sind, und daß der Außendurchmesser der Distanzhülsen (5.1 - 5.4) größer ist als der Durchmesser der Durchtrittsbohrungen (2.1 - 2.4) sowie deren der Breitseite der Aufhängelasche (2, 2', 2'') zugewandten Endflächen derart abgeschrägt sind, daß sie im aufgestecketen Zustand flach an der Aufhängelasche (2, 2', 2'') anliegen.

2. Rohr mit einer Aufhänge- und Befestigungsvorrichtung nach Anspruch 1,
dadurch gekennzeichnet,
daß die spitzen Winkel (α1, α2, α1', α2'), welche die Achsen der Durchtrittsbohrungen (2.1 - 2.4) mit der Mittelebene der Aufhängelasche (2) einschließen, alle den gleichen Betrag aufweisen.

3. Rohr mit einer Aufhänge- und Befestigungsvorrichtung nach Anspruch 2,
dadurch gekennzeichnet,
daß die spitzen Winkel (α1, α2, α1', α2') einen Betrag zwischen 30° und 80° aufweisen.

4. Rohr mit einer Aufhänge- und Befestigungsvorrichtung nach einem der Ansprüche 1 bis 3,
dadurch gekennzeichnet,
daß das Befestigungselement als um den Umfang des Rohres ganz herumgeführtes Stahlseil (19) ausgebildet ist, an dessen Enden jeweils eine Gewindehülse (19.1, 19.2) befestigt ist.

5. Rohr mit einer Aufhänge- und Befestigungsvorrichtung nach einem derAnsprüche 1 bis 3,
dadurch gekennzeichnet,
daß das Befestigungselement aus zwei zu beiden Seiten jeweils halb um den Umfang des Rohres (1, 1', 1'') herumgeführten Teilstücken (3.1 bis 3.4) besteht, die über ein Verbindungselement miteinander verbunden sind, welches als flache Verbindungslasche (4, 4', 4'') ausgebildet ist, die mit einer Schmalseite (4.5) in Längsrichtung des Rohres diametral zur Aufhängelasche (2) auf dessen Mantelfläche aufgesetzt ist und an deren in Längsrichtung verlaufenden Breitseiten (4.6, 4.7) ebenfalls Durchtrittsbohrungen (4.1 - 4.4) in der gleichen Anzahl wie bei der Aufhängelasche (2) angeordnet sind, deren Achsen jeweils mit der Mittelebene der Verbindungslasche (4, 4', 4'') in Richtung auf das Rohr (1, 1', 1'') gesehen vorgegebene spitze Winkel (β1, β2, β1', β2') einschließen, derart, daß mindestens die Winkel zweier Durchtrittsbohrungen (4.1 - 4.2, 4.3 - 4.4) entgegengesetzte Vorzeichen besitzen und die mit Schraubengewinde versehenen Enden der Teilstücke (3.1 - 3.4) des Befestigungselements durch die Durchtrittsbohrungen (4.1 - 4.4) der Verbindungslasche (4) hindurchgeführt und durch Aufschrauben von Schraubenmuttern (8) festgelegt sind, wobei auch auf diese Enden vor dem Aufschrauben der Schraubenmuttern (8) Distanzhülsen (6.1 - 6.4) aufgeseteckt sind, deren Außendurchmesser größer ist als der Durchmesser der Durchtrittsbohrungen und deren der Breitseite der Verbindungslasche (4, 4', 4'') zugewandte Endflächen derart abgeschrägt sind, daß sie im aufgesteckten Zustand flach an der Verbindungslasche (4, 4', 4'') anliegen.

6. Rohr mit einer Aufhänge- und Befestigungsvorrichtung nach Anspruch 5,
dadurch gekennzeichnet,
daß die spitzen Winkel (β1, β2, β1', β2'), welche die Achsen der Durchtrittsbohrungen (4.1 - 4.4) mit der Mittelebene der Verbindungslaschen (4, 4', 4'') einschließen, alle den gleichen Betrag aufweisen.

7. Rohr mit einer Aufhänge- und Befestigungsvorrichtung nach Anspruch 6,
dadurch gekennzeichnet,
daß die spitzen Winkel (β1, β2, β1', β2') einen Betrag zwischen 30° und 80° aufweisen.

8. Rohr mit einer Aufhänge- und Befestigungsvorrichtung nach einem der Ansprüche 5 bis 7,
dadurch gekennzeichnet,
daß die Teilstücke des Befestigungselements als Stahlseile (23.1, 23.2) ausgebildet sind, an deren Enden jeweils Gewindehülsen (23.3, 23.5; 23.4, 23.6) befestigt sind.

9. Rohr mit einer Aufhänge- und Befestigungsvorrichtung nach einem der Ansprüche 5 bis 7,
dadurch gekennzeichnet,
daß die Teilstücke des Befestigungselements als zu beiden Seiten des Rohres (1, 1', 1'') angelegte Befestigungsbügel (3.1 - 3.4, 3.1' - 3.4', 3.1'' - 3.4'') ausgebildet sind, deren Enden jeweils mit Schraubengewinden versehen sind.

10. Rohr mit einer Aufhänge- und Befestigungsvorrichtung nach Anspruch 9,
dadurch gekennzeichnet,
daS die Befestigungsbügel (3.1 - 3.4) eine solche Krümmung aufweisen, daß ihre Enden einen Winkel (γ) von 50 bis 100° einschließen.

11. Rohr mit einer Aufhänge- und Befestigungsvorrichtung nach einem der Ansprüche 5 bis 10,
dadurch gekennzeichnet,
daS Aufhängelasche (2) und Verbindungslasche (4) jeweils mindestens drei Durchtrittsbohrungen für mindestens drei Teilstücke der Befestigungselemente aufweisen.

12. Rohr mit einer Aufhänge- und Befestigungsvorrichtung nach Anspruch 11,
dadurch gekennzeichnet,
daß Aufhängelasche (2) und Verbindungslasche (4) jeweils vier oder mehr Durchtrittsöffnungen (2.1 - 2.4 bzw. 4.1 - 4.4) aufweisen für vier oder mehr Teilstücke (3.1 - 3.4) der Befestigungselemente, die jeweils paarweise und parallel an den einander gegenüberliegenden Seiten des Rohres angeordnet sind.

13. Rohr mit einer Aufhänge- und Befestigungsvorrichtung nach einem der Ansprüche 1 bis 12,
dadurch gekennzeichnet,
daß an der Aufhängelasche (2) ein Aufhängeelement (2.8) angeordnet ist.

14. Rohr mit einer Aufhänge- und Befestigungsvorrichtung nach Anspruch 5 und 13 zur Aufhängung und Befestigung von in vertikaler Richtung verlaufenden Rohren (1''),
dadurch gekennzeichnet,
daß die Verbindungslasche (4'') in der gleichen Weise ausgebildet ist wie die Aufhängelasche (2''), und an der Rohraußenseite Knaggen (15.1, 15.2) angeordnet sind, über die sich das Rohr (1'') zusätzlich auf der Aufhängelasche (2'') und der Verbindungslasche (4'') abstützt.

15. Rohr mit einer Aufhänge- und Befestigungsvorrichtung nach einem der Ansprüche 5 bis 14,
dadurch gekennzeichnet,
daß an der Aufhängelasche (2') und/oder der Verbindungslasche (4') Gleitlager (11.2, 12) zur Vertikalabstützung angeordnet sind.

16. Rohr mit einer Aufhänge- und Befestigungsvorrichtung nach einem der Ansprüche 5 bis 15,
dadurch gekennzeichnet,
daß an der Aufhängelasche (2') und/oder der Verbindungslasche (4') Gleitlager (14) zur Horizontalabstützung angeordnet sind.

17. Rohr mit einer Aufhänge- und Befestigungsvorrichtung nach einem der Ansprüche 1 bis 16,
dadurch gekennzeichnet,
daß die Schraubenmuttern mit Sicherungsvorrichtungen versehen sind.

18. Rohr mit einer Aufhänge- und Befestigungsvorrichtung nach Anspruch 17,
dadurch gekennzeichnet,
daß bei mindestens zwei Durchtrittsbohrungen mit nach Betrag und Vorzeichen gleichen Winkeln die Sicherungsvorrichtung als Sicherungsbleche (9, 10) ausgebildet sind, die zwei Löcher aufweisen, über welche sie auf nebeneinander liegende Enden von Teilstücken (3.1 - 3.4) der Befestigungselemente aufgesteckt sind, sowie zwei Laschen, die jeweils an eine der Außenflächen einer Schraubenmutter (7, 8) zu deren Arretierung angedrückt sind.

19. Rohr mit einer Aufhänge- und Befestigungsvorrichtung nach Anspruch 1 oder 5,
dadurch gekennzeichnet,
daß zwischen der Schmalseite der Aufhängelasche (2) und/oder der Verbindungslasche (4) und der Mantelfläche des Rohres (1) ein an den Rohrdurchmesser angepaßtes, schalenartiges Zwischenstück (16, 17) angeordnet ist.

20. Rohr mit einer Aufhänge- und Befestigungsvorrichtung nach Anspruch 14,
dadurch gekennzeichnet,
daß an den Oberseiten der Verbindungslasche (4'') und der Aufhängelasche (2'') parallel zum Rohrquerschnitt liegende Plattenelemente (20, 21) befestigt sind, die mittels Verbindungselementen (24, 25) zu einer das Rohr (1'') umgebenden Ringplatte verbunden sind und auf denen die an der Rohraußenseite angeordneten Knaggen (15.1, 15,2) aufliegen.

21. Rohr mit einer Aufhänge- und Befestigungsvorrichtung nach einem der Ansprüche 1 bis 3,
dadurch gekennzeichnet,
daß das Befestigungselement aus zwei zu beiden Seiten jeweils halb um den Umfang des Rohres (1) herumgeführten Teilstücken (3.1''', 3.2''') besteht, die über ein Verbindungselement (18) miteinander Verbunden sind, welches mit einer Schmalseite (18.1) in Längsrichtung des Rohres diametral zur Aufhängelasche (2) auf dessen Mantelfläche aufgesetzt ist und an dessen in Längsrichtung des Rohres (1) verlaufenden Breitseiten Durchtrittsbohrungen (4.1''', 4.2''') in der gleichen Anzahl wie bei der Aufhängelasche (2) angeordnet sind, deren Achsen senkrecht zu den Breitseiten verlaufen und die jeweils an der Eintrittsseite der Teilstücke (3.1''', 3.2''') eine Erweiterung (18.1) ihres Durchmessers aufweisen, so daß die mit Schraubengewinde versehenen Enden der Teilstücke (3.1''', 3.2''') des Befestigungselements durch die Durchtrittsbohrungen des Verbindungselements (18) hindurchgeführt und durch Aufschrauben von Schraubenmuttern (8) festgelegt sind.

## Claims

1. A pipe (1, 1', 1'') with a suspension and securing device, with a suspension element which is in the form of a flat suspension flange (2, 2', 2'') mounted on the pipe (1, 1', 1'') and which has at least two through-bores (2.1 - 2.4) the axes of which respectively include a predetermined acute angle (α1, α2, α1', α2') with the centre plane of the suspension flange (2, 2', 2'') looking in the direction of the pipe, at least two of the angles of the through-bores (2.1, 2.2 or 2.3, 2.4) having opposite signs, and with securing elements (3.1 - 3.4) which are guided in the circumferential direction along the pipe (1, 1', 1''), and the ends of which, provided with screw threads, are passed through the through-bores (2.1 - 2.4), wherein threaded nuts (7) are screwable on the ends for locating the securing elements (3.1 - 3.4) at the pipe (1, 1', 1'').
characterised in that
the securing elements (3.1 - 3.4) have a circular cross-section; in that the suspension flange (2, 2', 2'') is mounted with its narrow side (2.5) in the longitudinal direction of the pipe (1, 1', 1'') and on the mantle surface of the latter, and has the through-bores (2.1 - 2.4) on its longitudinally extending broad sides (2.6, 2.7); in that, before screwing the threaded nuts (7) on, spacer sleeves (5.1 - 5.4) are set on the ends of the securing elements (3.1 - 3.4); and in that the outer diameter of the spacer sleeves (5.1 - 5.4) is greater than the diameter of the through-bores (2.1 - 2.4) and the end surfaces of the sleeves facing the broad sides of the suspension flange (2, 2', 2'') are so bevelled that in the mounted state they lie flat against the suspension flange (2, 2', 2'').

2. A pipe with a suspension and securing device according to claim 1,
characterised in that
the acute angles (α1, α2, α1', α2') included by the axes of the through-bores (2.1 - 2.4) with the centre plane of the suspension flange (2) are all of the same magnitude.

3. A pipe with a suspension and securing device,
characterised in that
the magnitude of the acute angles (α1, α2, α1', α2') is between 30° and 80°.

4. A pipe with a suspension and securing device according to any of claims 1 to 3,
characterised in that
the securing element is formed as a steel rope (19) passed all the way around the periphery of the pipe, a respective threaded sleeve (19.1, 19.2) being secured at the ends of the rope.

5. A pipe with a suspension and securing device according to any of claims 1 to 3,
characterised in that
the securing element consists of two part-pieces (3.1 to 3.4) passed respectively around one-half of the circumference of the pipe (1, 1', 1'') and connected together via a connecting element formed as a flat connection flange (4, 4', 4'') which is mounted with one narrow side (4.5) in the longitudinal direction diametrally opposite the suspension flange (2) on the mantle surface of the latter, and on the longitudinally extending broad sides (4.6, 4.7) of which there are arranged as many through-bores (4.1 - 4.4) as on the suspension flange (2), the axes of these through-bores respectively including predetermined acute angles (β1, β2, β1', β2') with the centre plane of the connecting flange (4, 4', 4'') when viewed in the direction towards the pipe (1, 1', 1'') such that the angles of at least two through-bores (4.1 - 4.2, 4.3 - 4.4) have opposite signs, and ends of the part-pieces (3.1 - 3.4) of the securing element provided with threads are passed through the through-bores (4.1 - 4.4) of the connecting flange (4) and are located by screwing threaded nuts (8) on them, wherein spacer sleeves (6.1 - 6.4) are mounted on these ends, too, their outer diameter being greater than the diameter of the through-bores and their end faces facing the broad side of the connecting flange (4, 4', 4'') being bevelled in such a manner that in the mounted condition they bear flat against the connecting flange (4, 4', 4'').

6. A pipe with a suspension and securing device according to claim 5,
characterised in that
the acute angles (β1, β2, β1', β2') included by the axes of the through-bores (4.1 - 4.4) with the centre plane of the suspension flange (2) are all of the same magnitude.

7. A pipe with a suspension and securing device, according to claim 6,
characterised in that
the magnitude of the acute angles (β1, β2, β1', β2') is between 30° and 80°.

8. A pipe with a suspension and securing device, according to any of claims 5 to 7,
characterised in that
the part-pieces of the securing element are formed as steel ropes (23.1, 23.2) to the ends of which respective threaded sleeves (23.3, 23.5; 23.4, 23.6) are secured.

9. A pipe with a suspension and securing device, according to any of claims 5 to 7,
characterised in that
the part-pieces of the securing element are formed as securing hangers (3.1 - 3.4, 3.1' - 3.4', 3.1'' - 3.4'') laid at the two sides of the pipe (1, 1', 1'') and provided with threads at their ends.

10. A pipe with a suspension and securing device, according to claim 9,
characterised in that
the curvature of the securing hangers (3.1 - 3.4) is such that their ends include an angle (γ) of 50 to 100°.

11. A pipe with a suspension and securing device, according to any of claims 5 to 10,
characterised in that
the suspension flange (2) and the connecting flange (4) each have at least three through-bores for at least three part-pieces of the securing elements.

12. A pipe with a suspension and securing device, according to claim 11,
characterised in that
the suspension flange (2) and the connection flange (4) each have at least four or more through-bores (2.1 - 2.4, 4.1 - 4.4, respectively), for four or more part-pieces (3.1 - 3.4) of the securing elements, which are arranged in pairs and in parallel at the mutually opposite sides of the pipe.

13. A pipe with a suspension and securing device, according to any of claims 1 to 12,
characterised in that
a suspension element (2.8) is arranged at the suspension flange (2).

14. A pipe with a suspension and securing device, according to claims 5 and 13 for suspending and securing vertically extending pipes (1''),
characterised in that
the connecting flange (4'') is formed in the same way as the suspension flange (3''), and on the outside of the pipe dogs (15.1, 15.2) are arranged by means of which the pipe (1'') additionally supports itself on the suspension flange (2') and the connecting flange (4'').

15. A pipe with a suspension and securing device, according to any one of claims 5 to 14,
characterised in that
for vertical support slide bearings (11.2, 12) are arranged on the suspension flange (2') and/or the connecting flange (4').

16. A pipe with a suspension and securing device, according to any of claims 5 to 15,
characterised in that
for horizontal support slide bearings (14) are arranged on the suspension flange (2') and/or the connecting flange (4').

17. A pipe with a suspension and securing device, according to any of claims 5 to 15,
characterised in that
the threaded nuts are provided with security devices.

18. A pipe with a suspension and securing device according to claim 17,
characterised in that
in the case of at least two through-bores with angles which are equal in magnitude and sign, the security device is formed as security tabs (9, 10) provided with two holes through which they are mounted on adjacently disposed ends of the part-pieces (3.1 - 3.4) of the securing elements, as well as two flanges which are each pressed against the outer surfaces of a threaded nut (7, 8) to detain the latter.

19. A pipe with a suspension and securing device according to claim 1 or 5,
characterised in that
a shell-like intermediate piece (16, 17) matched to the pipe diameter is arranged between the narrow side of the suspension flange (2) and/or the connecting flange and the mantle surface of the pipe (1).

20. A pipe with a suspension and securing device according to claim 14,
characterised in that
plate elements (20, 21) lying parallel to the cross-section of the pipe are arranged at the upper sides of the connecting flange (4'') and the suspension flange (2''), are connected by way of coupling elements (24, 25) with an annular plate surrounding the pipe (1''), and on which lie the dogs (15.1, 15.2) arranged on the outside of the pipe.

21. A pipe with a suspension and securing device according to any of claims 1 to 3,
characterised in that
the securing element consists of two part-pieces (3.1'', 3.2''') respectively passed halfway around the circumference of the pipe (1) and connected together via a connecting element (18) which is mounted with one narrow side (18.1) in the longitudinal direction of the pipe diametrally of the suspension flange (2) on the mantle surface of the latter, with through-bores (4.1''', 4.2''') of the same number as those of the suspension flange (2) arranged on the broad sides extending in the longitudinal direction of the pipe (1), the axes of these through-bores extending perpendicularly to the broad sides and each having a widening (18.1) of their diameter at the entry side of the part-pieces (3.1''', 3.2''') of the securing element provided with screw threading are passed through the through-bores of the connecting element (18) and are located by screwing of screw nuts.

## Revendications

1. Tube (1, 1', 1'') comportant un dispositif de suspension et de fixation possédant un élément de suspension qui est monté sur le tube (1, 1', 1'') et possède la forme d'une patte plane de suspension (2, 2', 2''), qui possède au moins deux perçages traversants (2.1-2.4), dont les axes respectifs font respectivement avec le plan médian de la patte de suspension (2, 2', 2'') un angle aigu prédéterminé (α1, α2, α1', α2'), lorsqu'on regarde dans la direction du tube (1, 1', 1''), parmi lesquels au moins les angles de deux perçages traversants (2.1, 2.2 ou 2.3, 2.4) possèdent des signes opposés, et des éléments de fixation (3.1-3.4), qui s'étendent dans la direction circonférentielle contre le tube (1, 1', 1'') et dont les extrémités pourvues d'un filetage traversent les passages traversants (2.1-2.4), des écrous (7) étant vissés sur les extrémités, pour la fixation des éléments de fixation (3.1-3.4) sur le tube (1, 1', 1''), caractérisé en ce que les éléments de fixation (3.1-3.4) possèdent une section transversale circulaire, que la patte de suspension (2, 2', 2'') est appliquée par un petit côté (2.5), dans la direction longitudinale du tube (1, 1', 1''), sur la surface enveloppe de ce tube et porte les perçages traversants (2.1-2.4) aux côtés larges (2.6, 2.7) s'étendant dans la direction longitudinale, que des douilles entretoises (5.1-5.4) sont emmanchées sur les extrémités des éléments de fixation (3.1-3.4) avant le vissage des écrous (7), et que le diamètre extérieur des douilles entretoises (5.1-5.4) est supérieur au diamètre des perçages traversants (2.1-2.4) et que leurs surfaces d'extrémité, qui sont tournées vers le côté large de la patte de suspension (2, 2', 2''), sont biseautées de telle sorte qu'à l'état enfiché, elles s'appliquent à plat contre la patte de suspension (2, 2', 2'').

2. Tube comportant un dispositif de suspension et de fixation selon la revendication 1, caractérisé en ce que les angles aigus (α1, α2, α1', α2'), que les axes des perçages traversants (2.1-2.4) font avec le plan médian de la patte de suspension (2), possèdent tous la même valeur.

3. Tube comportant un dispositif de suspension et de fixation selon la revendication 2, caractérisé en ce que les angles aigus (α1, α2, α1', α2') possèdent une valeur comprise entre 30° et 80°.

4. Tube comportant un dispositif de suspension et de fixation selon l'une des revendications 1 à 3, caractérisé en ce que l'élément de fixation est réalisé sous la forme d'un câble en acier (19), qui entoure complètement la circonférence du tube et aux extrémités duquel est fixée respectivement une douille filetée (19.1, 19.2).

5. Tube comportant un dispositif de suspension et de fixation selon l'une des revendications 1 à 3, caractérisé en ce que l'élément de fixation est constitué de deux parties (3.1 à 3.4), qui s'étendent des deux côtés du tube (1, 1', 1'') respectivement sur la moitié de la périphérie du tube et qui sont reliées entre elles par l'intermédiaire d'un élément de liaison, qui est réalisé sous la forme d'une patte de liaison plane (4, 4', 4''), qui est appliquée, par un petit côté (4.5) sur la surface enveloppe du tube, dans la direction longitudinale de ce dernier, diamétralement par rapport à la patte de suspension (2) et que sur les côtés larges (4.6, 4.7), qui s'étendent dans la direction longitudinale, de cette patte sont également ménagés des perçages traversants (4.1-4.4) en un nombre égal à celui des perçages ménagés dans la patte de suspension (2) et dont les axes font, respectivement avec le plan médian de la patte de liaison (4, 4', 4''), des angles aigus prédéterminés (β1, β2, β1', β2'), lorsqu'on regarde dans la direction du tube (1, 1', 1''), de telle sorte qu'au moins les angles de deux perçages traversants (4.1, 4.2, 4.3, 4.4) possèdent des signes opposés et que les extrémités, pourvues d'un filetage, des parties (3.1-3.4) de l'élément de fixation traversent les perçages traversants (4.1-4.4) de la patte de liaison (4) et sont fixées par vissage d'écrous (8), et que sur ces extrémités sont emmanchées, avant le vissage des écrous (8), des douilles entretoises (6.1-6.4), dont le diamètre extérieur est supérieur au diamètre des perçages traversants et dont les surfaces d'extrémité, qui sont tournées vers le côté large de la patte de liaison (4, 4', 4''), sont biseautées de sorte qu'à l'état emmanché, les douilles s'appliquent à plat contre la patte de liaison (4, 4', 4'').

6. Tube comportant un dispositif de suspension et de fixation selon la revendication 5, caractérisé en ce que les angles aigus (β1, β2, β1', β2'), que les axes des perçages traversants (4.1-4.4) font avec le plan médian des pattes de liaison (4, 4', 4''), possèdent tous la même valeur.

7. Tube comportant un dispositif de suspension et de fixation selon la revendication 6, caractérisé en ce que les angles (β1, β2, β1', β2') possèdent une valeur comprise entre 30° et 80°.

8. Tube comportant un dispositif de suspension et de fixation selon l'une des revendications 5 à 7, caractérisé en ce que les parties de l'élément de fixation sont agencées sous la forme de câbles en acier (23.1, 23.2), sur les extrémités desquels sont fixées respectivement des douilles filetées (23.3, 23.5; 23.4, 23.6).

9. Tube comportant un dispositif de suspension et de suspension selon l'une des revendications 5 à 7, caractérisé en ce que les parties de l'élément de fixation sont réalisées sous la forme d'étriers de fixation (3.1-3.4; 3.1'-3.4'; 3.1''-3.4''), qui sont appliquées des deux côtés du tube (1, 1', 1'') et dont les extrémités comportent des filetages respectifs.

10. Tube comportant un dispositif de suspension et de fixation selon la revendication 9, caractérisé en ce que les étriers de fixation (3.1-3.4) possèdent une courbure telle que leurs extrémités font un angle (γ) compris entre 50 et 100°.

11. Tube comportant un dispositif de suspension et de fixation selon l'une des revendications 5 à 10, caractérisé en ce que la patte de suspension (2) et la patte de liaison (4) possèdent respectivement au moins trois perçages traversants pour au moins trois parties des éléments de fixation.

12. Tube comportant un dispositif de suspension et de fixation selon la revendication 11, caractérisé en ce que la patte de suspension (2) et la patte de liaison (4) possèdent chacune quatre ou un plus grand nombre d'ouvertures traversantes (2.1-2.4) ou (4.1-4.4), pour quatre ou un plus grand nombre de parties (3.1-3.4) des éléments de fixation, qui sont disposées respectivement par couples et parallèlement aux côtés du tube, qui sont réciproquement en vis-à-vis.

13. Tube comportant un dispositif de suspension et de fixation selon l'une des revendications 1 à 12, caractérisé en ce qu'un élément de suspension (2.8) est disposé sur la patte de fixation (2).

14. Tube comportant un dispositif de suspension et de fixation selon les revendications 5 et 13 pour la suspension et la fixation de tubes (1'') s'étendant dans la direction verticale, caractérisé en ce que la patte de liaison (4'') est agencée de la même manière que la patte de suspension (3'') et que sur la face extérieure du tube sont disposés des tétons (15.1, 15.2) au moyen desquels le tube (1'') prend appui en supplément sur la patte de suspension (2') et sur la patte de liaison (4'').

15. Tube comportant un dispositif de suspension et de fixation selon l'une des revendications 5 à 14, caractérisé par le fait que des paliers lisses (11.2, 12) sont disposés, pour réaliser un soutien vertical, sur la patte de suspension (2') et/ou sur la patte de liaison (4').

16. Tube comportant un dispositif de suspension et de fixation selon l'une des revendications 5 à 15, caractérisé en ce que les paliers lisses (14) servant à réaliser un soutien horizontal sont disposés sur la patte de suspension (2') et/ou sur la patte de liaison (4').

17. Tube comportant un dispositif de suspension et de fixation selon l'une des revendications 1 à 16, caractérisé en ce que les écrous sont équipés de dispositifs de sécurité.

18. Tube comportant un dispositif de suspension et de fixation selon la revendication 17, caractérisé en ce que dans le cas d'au moins deux perçages traversants possédant des angles ayant même valeur et même signe, le dispositif de sécurité est réalisé sous la forme de tôles de sécurité (9, 10), qui possèdent deux trous, au moyen desquels elles sont emmanchées sur des extrémités, disposées côte-à-côte, de parties (3.1-3.4) des éléments de fixation, ainsi que deux pattes, qui sont repoussées respectivement contre l'une des surfaces extérieures d'un écrou (7, 8), pour leur blocage.

19. Tube comportant un dispositif de suspension et de fixation selon la revendication 1 ou 5, caractérisé en ce qu'un élément intercalaire en forme de coque (16, 17), adapté au diamètre du tube, est disposé entre le petit côté de la patte de suspension (2) et/ou de la patte de liaison (4) et la surface enveloppe du tube (1).

20. Tube comportant un dispositif de suspension et de fixation selon la revendication 14, caractérisé en ce que sur les faces supérieures de l'électrode de liaison (4'') et de la patte de suspension (2'') sont fixés des éléments de plaque (20, 21), qui sont parallèles à la section transversaie du tube, sont reliées au moyen d'éléments de liaison (24, 25) à une plaque annulaire entourant le tube (20'') et sur lesquels s'appliquent les tétons (15.1, 15.2) disposés sur la face extérieure du tube.

21. Tube comportant un dispositif de suspension et de fixation selon l'une des revendications 1 à 3, caractérisé en ce que l'élément de fixation est constitué par deux parties (3.1''', 3.2'''), qui s'étendent des deux côtés du tube (1) respectivement sur la moitié de la périphérie de ce tube et qui sont reliées entre elles par l'intermédiaire d'un élément de liaison (18) qui s'applique par un petit côté (18.1) sur la surface enveloppe du tube, dans la direction longitudinale de ce dernier, diamétralement par rapport à la patte de suspension (2) et que des perçages traversants (4.1''', 4.2''') sont ménagés dans les côtés larges de l'élément de liaison, qui s'étendent dans la direction longitudinale du tube (1), en un nombre égal à celui des perçages ménagés dans la patte de suspension (2), que leurs axes sont perpendiculaires au côté large et que ces perçages possèdent, respectivement au niveau du côté d'entrée des parties (3.1''', 3.2'''), une partie de diamètre accru (18.1), de sorte que les extrémités, pourvues de filetages, des parties (3.1''', 3.2''') de l'élément de fixation traversent les perçages traversants de l'élément de liaison (18) et sont fixées grâce au vissage d'écrous (8).
